# EUROPEAN PATENT APPLICATION

(11) **EP 2 363 699 A1**
(43) Date of publication of application: **07.09.2011**
(21) Application number: 10155216.4
(22) Date of filing: 02.03.2010
(51) Int. Cl.: G01M 7/02, G01M 7/08, G01N 29/14, G01N 29/44, G01N 29/46, H02K 11/00, H02K 3/493

(54) **Vibration monitoring of a magnetic element in an electrical machine**

(71) Applicant: Siemens Aktiengesellschaft, 80333 München (DE)
(72) Inventor: Andersen, Kurt, 6623, Vorbasse (DK); Besnerais, Jean Le, 7330, Brande (DK); Moelgaard, Anders, 8600, Silkeborg (DK)

(57) **Abstract**

An electrical machine is described comprising two moving elements, of which a first moving element is a stator of the electrical machine and the other moving element is a rotor of the electrical machine. Attached to one of the moving elements is a magnetic element which interacts with a magnetic flux in the electrical machine during operation. Further, a sensor is provided for measuring a vibrational quantity of the electrical machine and a control unit is configured for detecting a displacement of the magnetic element on the basis of the measured vibrational quantity. The electrical machine may be a generator or a motor.

## Description

### Field of the invention

The present invention relates to the field of electrical machines such as generators or motors.

### Art background

In some electrical machines, a winding thereof is received in a core slot and an opening of the core slot is closed with a so-called wedge. The wedge may be magnetic or non-magnetic. A magnetic wedge has a certain magnetic property which is designed to provide an intended function. For example, respectively configured magnetic wedges are used to reduce core losses, vibrations, zigzag torque and magnetization current. Magnetic wedges are in particular used in induction machines.

However, the magnetic wedges are subject to high magnetic forces and high thermocycles. As a result, a magnetic wedge can get loose and hence can be displaced or even taken out of the slot. As a result, the winding insulation is not protected any more, gets worn with time and finally could result in a short circuit. Such a short circuit may generate high pulsating torques that may damage parts of the machine. In order to overcome the above problem, it is known to use non-magnetic wedges.

In view of the above-described situation, there exists a need for an improved technique that enables to provide an electrical machine which substantially avoids or at least reduces one or more of the above-identified problems.

### Summary of the invention

This need may be met by the subject matter according to the independent claims. Advantageous embodiments of the herein disclosed subject matter are described by the dependent claims.

According to a first aspect of the invention, there is provided an electrical machine comprising two moving elements being movable with respect to each other, wherein one of the moving elements forms a stator of the electrical machine and the other of the moving elements forms a rotor of the electrical machine. A magnetic element is attached to one of the moving elements. The magnetic element interacts with a magnetic flux in the electrical machine during operation of the electrical machine. Further, the electrical machine according to the first aspect comprises a sensor for measuring a vibrational quantity of the electrical machine. Still further, the electrical machine comprises a control unit for detecting a displacement of the magnetic element on the basis of the measured vibrational quantity.

This aspect of the invention is based on the idea that a displaced magnetic element changes the reluctance distribution in the electrical machine and hence vibrations which are caused by the magnetic forces inside the machine. Hence, by measuring a vibrational quantity of the electrical machine, a displacement of the magnetic element can be detected.

It should be understood that although in the first aspect it is referred to a magnetic element, of course two or more magnetic elements and usually a plurality of magnetic elements are provided in the electrical machine.

According to an embodiment, the term "magnetic" includes "made of a magnetic active material" or, "made of a high magnetic permeability material", just to name some examples. Generally herein, the term "magnetic element which interacts with a magnetic flux in the electrical machine" includes an embodiment wherein the magnetic element is configured and/or positioned in the electrical machine that it has a certain influence on the magnetic flux in the electrical machine. In some exemplary examples, "interacting with a magnetic flux" includes adjusting the magnetic flux in the electrical machine, increasing the flux in the electrical machine, optimizing the flux in the electrical machine, etc.

According to a further embodiment, the sensor is an accelerometer for measuring an acceleration of the electrical machine. For example, according to an embodiment the rotor rotates about an axis of rotation and the sensor is provided so as to measure an acceleration in a direction which forms an angle with the axis of rotation, wherein the angle is different from zero degrees. For example, according to an embodiment, the sensor may be provided so as to measure radial vibrations of the electrical machine.

According to a further embodiment, the electrical machine comprises an air gap between the moving elements and the magnetic element is positioned facing the air gap. An example of such an embodiment is a magnetic element which is provided in the form of a magnetic wedge of the electrical machine. According to other embodiments, the magnetic element referred to herein may be any other magnetic element of the electrical machine.

According to a further embodiment, the one of the moving elements, to which the magnetic element is attached, comprises a winding and the magnetic element is positioned between the winding and the air gap, thereby forming a wedge in one embodiment. Such a configuration may result in an improved efficiency, for example in reduced core losses of the electrical machine.

According to a further embodiment, the sensor is configured for measuring the vibrational quantity for a plurality of frequencies so as to provide a spectrum of the vibrational quantity. In accordance with such an embodiment, according to a further embodiment the control unit is configured for monitoring at least part of the spectrum and for determining the displacement of the magnetic element if the vibrational quantity is outside a predetermined interval.

For example, according to an embodiment the predetermined interval has an upper boundary and a lower boundary and the control unit is configured for determining that the magnetic element is displaced if the vibrational quantity is either lower than the lower boundary of the predetermined interval and/or if the vibrational quantity is above the upper boundary of the predetermined interval. According to a further embodiment, the predetermined interval is a half open interval and comprises only a single boundary. For example, according to an embodiment, the predetermined interval comprises an upper boundary and the control unit is configured for determining that the magnetic element is displaced if the measured vibrational quantity is above the upper boundary of the predetermined interval. Further, according to a further embodiment, the control unit is configured for determining that the magnetic element is displaced if the vibrational quantity is below a lower boundary of a predetermined half open interval. It should be understood that the predetermined interval may be chosen depending on the nature of the vibrational quantity. Further, the predetermined interval may be set before operation of the electrical machine, e.g. during manufacture of the electrical machine. According to other embodiments, the predetermined interval determined during operation of the electrical machine, e.g. on the basis of operating parameters of the electrical machine and/or on the basis of the measured vibrational quantity of the electrical machine.

According to an embodiment the vibrational quantity is a mean amplitude of a mechanical vibration of the electrical machine. According to another embodiment, the vibrational quantity is a peak amplitude of a mechanical vibration of the electrical machine. According to a further embodiment, the vibrational quantity is a frequency of a mechanical vibration of the electrical machine. Other vibrational quantities of the electrical machine are also contemplated. For example, instead of determining mechanical vibrations of the electrical machine also electrical or magnetic vibrations or parameters of electrical or magnetic vibrations can be used as the vibrational quantity in the sense of the present application.

According to a second aspect of the herein disclosed subject matter, a method for detecting a displacement of a magnetic element of an electrical machine is provided, wherein the electrical machine comprises two moving elements being movable with respect to each other and wherein one of the moving elements forms a stator of the electrical machine and the other of the moving elements forms a rotor of the electrical machine. The magnetic element, the displacement of which is to be detected, is attached to one of the moving elements. The method according to the second aspect comprises measuring a vibrational quantity of the electrical machine and detecting the displacement of the magnetic element on the basis of the measured vibrational quantity.

According to a third aspect of the herein disclosed subject matter, a method for operating a control unit of an electrical machine is provided, the method comprising receiving an input signal indicative of a vibrational quantity of the electrical machine, detecting, in response to said input signal, a displacement of a magnetic element of the electrical machine, and providing an output signal in response to a detected displacement of the magnetic element.

According to a fourth aspect of the herein disclosed subject matter, there is provided a computer program for processing an input signal, the input signal being indicative of a vibrational quantity of an electrical machine. The computer program, when being executed by a data processor, is adapted for controlling the method according to the third aspect or an embodiment thereof.

As used herein, reference to computer program is intended to be equivalent to a reference to a program element and/or a computer-readable medium containing instruction for controlling a computer system to coordinate the performance of the method according to the third aspect or an embodiment thereof.

The computer program may be implemented as computer-readable instruction code by use of any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the WorldWideWeb, from which it may be downloaded.

The invention may be realized by means of a computer program respectively software. However, the invention may also be realized by means of one or more specific electronic circuits respectively hardware. Furthermore, the invention may also be realized in hybrid form, i.e. in a combination of software modules and hardware modules.

In the following, there will be described exemplary embodiments of the subject matter disclosed herein with reference to an electrical machine, a method for detecting a displacement of a magnetic element of an electrical machine, and a method of operating a control unit. It has to be pointed out that of course any combination of features relating to different aspects of the herein disclosed subject matter is also possible. In particular, some embodiments are described with reference to apparatus type claims, whereas other embodiments are described with reference to method type claims. However, a skilled person will gather from the above and from the following description that, unless otherwise notified, in addition to any combination of features belonging to one aspect also any combination between features relating to different aspects or embodiments, for example even between features of the apparatus type claims and features of the method type claims is considered to be disclosed with this application.

The aspects and embodiments defined above and further aspects and embodiments of the present invention are apparent from the examples to be described hereinafter and are explained with reference to the drawings but to which the invention is not limited.

### Brief description of the drawings

Fig. 1 schematically shows a cross-sectional view of an electrical machine in accordance with embodiments of the herein disclosed subject matter.
Fig. 2 shows a velocity spectrum of an electrical machine according to the herein disclosed subject matter with and without displaced magnetic elements.
Fig. 3a shows a Fourier transform of an air gap radial force for different spatial orders and frequencies, wherein main exciting lines have been suppressed, for an electrical machine with all wedges in place.
Fig. 3b shows a spectrum similar to the spectrum of Fig. 3a wherein a magnetic wedge has been removed from the electrical machine.
Fig. 4 shows a data flow-chart for a method according to embodiments of the herein disclosed subject matter.

### Detailed description

The illustration in the drawings is schematic. It is noted that in different figures, similar or identical elements are provided with the same reference signs or with reference signs which are different from the corresponding reference signs only within the first digit or an appended character.

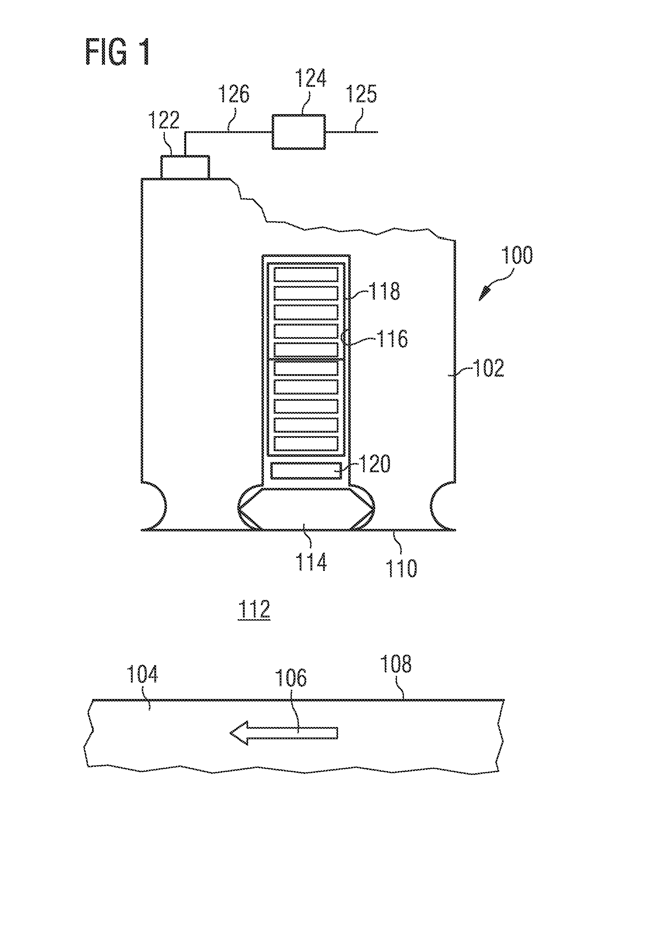

Fig. 1 shows in part a cross-sectional view of an electrical machine 100 in accordance with embodiments of the herein disclosed subject matter. The electrical machine 100 comprises two moving elements, a first moving element 102 in the form of a stator and a second moving element 104 in the form of a rotor. The rotor 104 is movable with respect to the stator 102, as indicated by arrow 106. It should be noted that although the rotor is depicted as having a flat surface 108, this is just for ease of illustration. Usually, when seen as a whole, the rotor 104 has a curved or generally circular surface 108. Likewise, also the stator 102 as a curved inner surface 110 which is also depicted as a flat surface in Fig. 1.

Between the stator 102 and the rotor 104 is an air gap, indicated at 112 in Fig. 1. Hence, the surfaces 108 of the rotor 104 and 110 of the stator 102 are facing each other and are also facing in the air gap 112. According to an illustrative embodiment, the stator comprises a magnetic element 114 attached to the stator. According to an embodiment, as shown in Fig. 1, the stator further comprises a slot 116 having positioned therein a winding 118 of the electrical machine. Further positioned between the winding 118 and the magnetic element 114 is an intermediate element 120.

According to an embodiment shown in Fig. 1, the magnetic element 114 is positioned between the winding 118 and the air gap 112. Hence, the magnetic element 114 is facing the air gap and, according to a further embodiment, closes the slot 116 and thereby protects the winding 118. Further, by providing the magnetic element 114, which is also called magnetic wedge in some embodiments, with suitable magnetic properties, core losses of the electrical machine can be reduced. In accordance with an embodiment of the herein disclosed subject matter, the electrical machine 100 further comprises a sensor 122 for measuring a vibrational quantity of the electrical machine. According to an embodiment shown in Fig. 1, the sensor is an accelerometer for measuring an acceleration of the electrical machine 100.

The acceleration measured by the sensor 122 may be for example due to a vibration of the electrical machine. Such an (additional) acceleration/vibration of the electrical machine arises if the magnetic element 114 is lost. Loosing the magnetic element 114 changes the reluctance distribution along the air gap, therefore altering the harmonic content of the flux density as well as the harmonic content of radial magnetic vibrations. In this way, an external accelerometer 122 can therefore be used to detect this change in the harmonic content of vibrations.

According to a further embodiment of the herein disclosed subject matter, the electrical machine 100 further comprises a control unit 124 for detecting a displacement or a removed of the magnetic element 114 on the basis of the measured vibrational quantity measured by the sensor 122 and outputting an output signal 125 in response to the detection. For example, according to an embodiment, the control unit 124 is configured for detecting a missing magnetic element 114 (magnetic wedge) by means of the vibration spectrum of the machine 100. The control unit may be for example software-based, i.e. being provided in the form of a computer program running on one or more processors. According to other embodiments, the control unit 124 is hardware-based and provided in the form of a discrete electronic circuit.

According to an embodiment, a (wired or wireless) communication connection 126 is provided between the sensor 122 and the control unit 124 for respective communication of these entities.

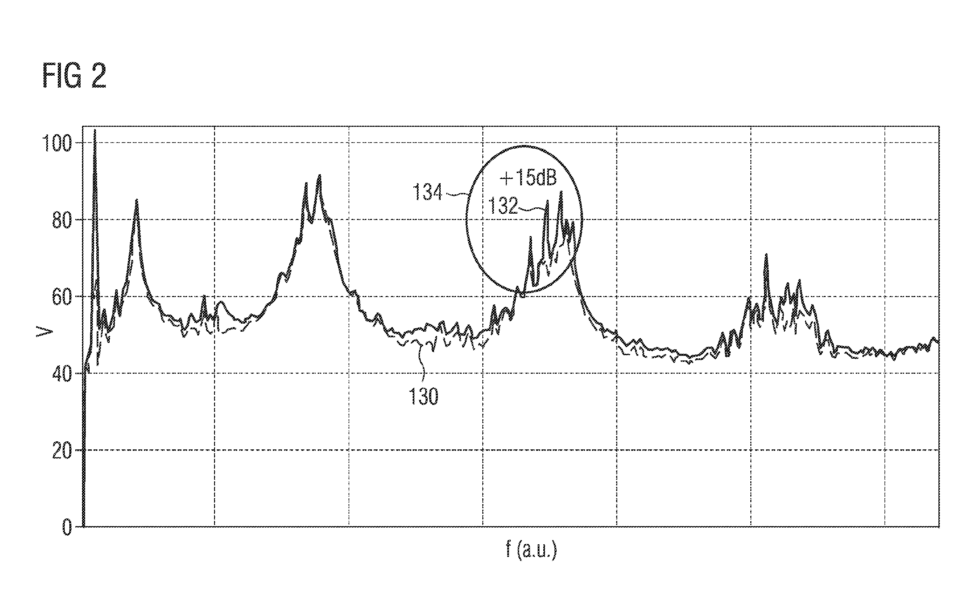

Fig. 2 shows a simulated vibration spectrum of both, a normal machine having all magnetic wedges in place and the same machine with one magnetic wedge removed. The vibration spectrum of the normal machine is indicated at 130 in Fig. 2 whereas the vibration spectrum of the machine with one missing magnetic wedge is indicated at 132 in Fig. 2. As is apparent from Fig. 2, the vibration magnitude of harmonics multiple of the rotor slot passing frequency, indicated by the peak in the region of circle 134 in Fig. 2, is clearly affected by the missing wedge. In the simulated example, the missing wedge results in an increase of the velocity by about 15 dB. The frequencies for which the missing magnetic wedge leads to an increase in the velocity are well-defined in function of the electrical parameters of the electrical machine 100. In Fig. 2 the velocity level V in dB and the frequency f are given in arbitrary units.

Instead of or in addition to a velocity spectrum as shown in Fig. 2, according to an embodiment the air gap radial force or its Fourier transform may be used as vibrational quantity for detecting loosened wedges.

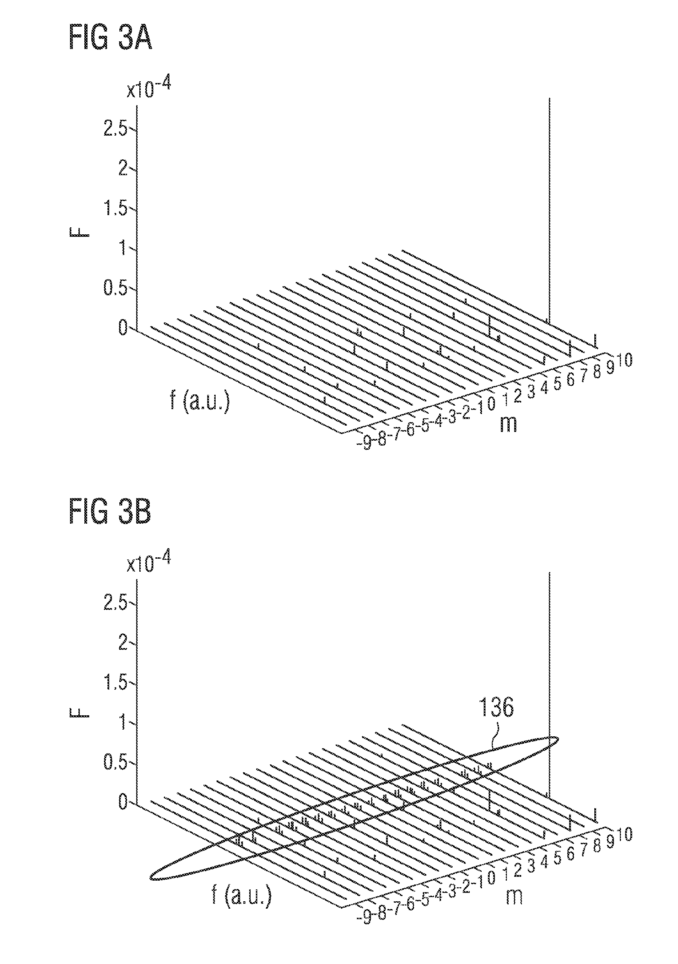

Fig. 3a shows the radial component of a Maxwell force F as a function of the frequency f and the spatial order of the vibration m. In particular, Fig. 3a shows the spectra of the force F if all wedges are present in the electrical machine, whereas Fig. 3b shows the spectra of the force F for the same machine but in which one wedge is missing. Further, in order to not obscure the results according to the herein disclosed subject matter, the main exciting lines of spatial order and frequency are suppressed in Fig. 3a and Fig. 3b.

As indicated by Fig. 3a, the missing wedge clearly results in a higher magnitude of forces and hence in a higher vibration magnitude, resulting in the respective peaks in force F within the range indicated at 136 in Fig. 3b.

As can be seen from Fig. 2 and Fig. 3a and Fig. 3b, already a single removed wedge generates a detectable change in the vibration of the electrical machine and also a visible change in slotting harmonics. It should be noted that usually it is not necessary to detect which wedge is missing, but rather to detect if any wedge is missing because reliable detection of a missing wedge allows the operator of the electrical machine to re-wedge the machine before coil insulation wearing and a short circuit in the coil (winding) occurs.

Those skilled in the art will recognize that of course any vibrational quantity, such an electrical quantity, a magnetic quantity or a mechanical quantity of the electrical machine can be used to detect a displaced magnetic element of the electrical machine. Just to give some examples, in the following some exemplary embodiments of the herein disclosed subject matter regarding the detection of the missing wedge from the measured vibrational quantity are described.

According to an embodiment, the sensor, for example the sensor 122 in Fig. 1, is configured for measuring the vibrational quantity for a plurality of frequencies so as to provide a spectrum of the vibrational quantity under consideration. As already mentioned with regard to Fig. 2, such a vibrational quantity may be the velocity of the electrical machine which can be measured by an external accelerometer. Further, according to a respective embodiment, the control unit is configured for monitoring at least part of the spectrum. For example, the control unit may be configured for monitoring a frequency range in which a detectable change in the vibrational quantity is expected, if a magnetic element, for example the magnetic wedge 114, is removed. For example, in the embodiment shown in Fig. 2, such a frequency range would be in the region of the peak indicated at 134.

Selection of the part of the spectrum may be predefined or may be performed during operation of the electrical machine. Further, a predetermined interval may be provided for determining that a magnetic element of the electrical machine is displaced. For example, the peak height of the peak indicated at 134 in Fig. 2 may be monitored over time during operation of the electrical machine. Then, according to one embodiment, a fixed predetermined interval is provided, and as long as the peak height is within the predetermined interval, all wedges of the electrical machine are considered to be in place. However, the control unit may be configured to provide an output signal indicating a loosened wedge if the peak height is outside the predetermined interval for the vibrational quantity under consideration.

Instead of using a predetermined, static predetermined interval, any other suitable algorithm may be used for detecting a displacement of the magnetic element. For example, according to another embodiment, the peak height of a specific peak in the spectrum of the vibrational quantity may be monitored over time during operation and a sudden change in the peak height may trigger the control unit for providing an output signal which indicates the displacement of a magnetic element.

Other control strategies are also contemplated and well within the scope of the herein disclosed subject matter.

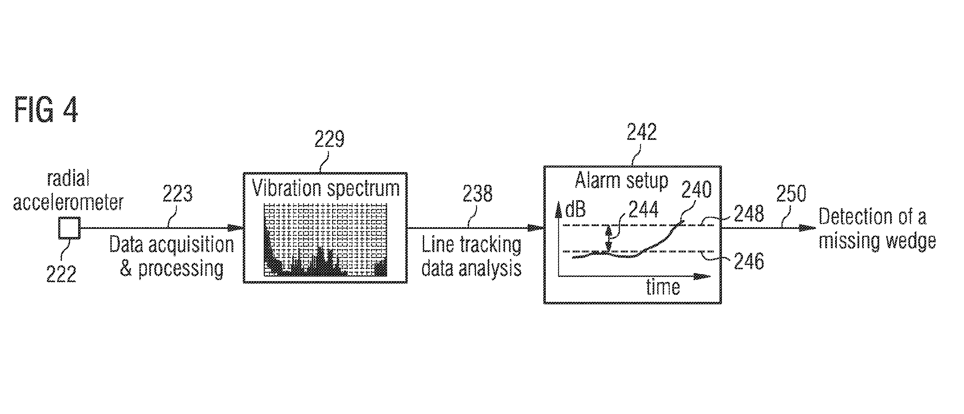

Fig. 4 shows a flow-chart of a detection of a missing wedge in an electrical machine, for example the electrical machine 100 of Fig. 1.

As shown in Fig. 4, according to an embodiment a radial accelerometer indicated at 222 is provided. The accelerometer provides an input signal 223 being indicative of a vibrational quantity of the electrical machine. By data acquisition and processing, which may be performed for example in the control unit, e.g. the control unit 124 of Fig. 1, a vibration spectrum is obtained from the input signal 223 provided by the radial accelerometer 222. The vibration spectrum is indicated at 229 in Fig. 4.

By line tracking and data analysis, indicated at 238 in Fig. 4, a certain quantity indicative of the vibrational quantity measured by the radial accelerometer 222 is obtained. The time evolution of this vibration indicating quantity 240 is shown in the graph 242 in Fig. 4. Further shown is a predetermined interval 244 with a lower boundary 246 and an upper boundary 248. If the measured quantity 240 is above the upper boundary 248 or below the lower boundary 246, the control unit determines that at least one wedge of the electrical machine or more generally, at least one magnetic element of the electrical machine is displaced. This detection process on the basis of the derived quantity 240 and the predetermined interval 244 is indicated at 250 in Fig. 4.

Although in the above description a magnetic wedge has been described as an example of a magnetic element according to the herein disclosed subject matter, those skilled in the art will easily recognize that a displacement of any other magnetic element of an electrical machine may be determined and detected in a similar way. Further, according to other embodiments, a plurality of magnetic elements is provided at the rotor and/or a plurality of magnetic elements is provided at the stator.

According to further embodiments of the herein disclosed subject matter, any component of the control unit, e.g. the whole control unit 124, is provided in the form of respective computer program products which enable a processor to provide the functionality of the control unit as disclosed herein. According to other embodiments, any component of the control unit may be provided in hardware. According to other, mixed, embodiments, some components may be provided in software while other components are provided in hardware. Further, it should be noted that a separate component (e.g. module) may be provided for each of the functions disclosed herein. According to other embodiments, at least one component (e.g. a module) is configured for providing two or more functions as disclosed herein.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above-described embodiments of the herein disclosed subject matter, one can state:
An electrical machine is described comprising two moving elements, of which a first moving element is a stator of the electrical machine and the other moving element is a rotor of the electrical machine. Attached to one of the moving elements is a magnetic element which interacts with a magnetic flux in the electrical machine during operation. Further, a sensor is provided for measuring a vibrational quantity of the electrical machine and a control unit is configured for detecting a displacement of the magnetic element on the basis of the measured vibrational quantity. The electrical machine may be a generator or a motor.

## Claims

1. An electrical machine (100) comprising:
- two moving elements (102, 104) being moveable with respect to each other, one of said moving elements forming a stator (102) of said electrical machine (100) and the other of said moving elements forming a rotor (104) of said electrical machine;
- a magnetic element (114) attached to one of said moving elements, said magnetic element (114) interacting with the magnetic flux in said electrical machine (100);
- a sensor (122) for measuring a vibrational quantity of the electrical machine (100); and
- a control unit (124) for detecting a displacement of said magnetic element (114) on the basis of the measured vibrational quantity.

2. The electrical machine according to claim 1, further comprising:
- an air gap (112) between said moving elements (102, 104); and
- said magnetic element (114) facing said air gap (112).

3. The electrical machine according to claim 2,
- said one of said moving elements (102) comprising a winding (118); and
- said magnetic element (114) being positioned between said winding (118) and said air gap (112).

4. The electrical machine according to one of the preceding claims,
- said sensor (122) being configured for measuring said vibrational quantity for a plurality of frequencies so as to provide a spectrum (130, 132) of said vibrational quantity; and
- said control unit (124) being configured for
o monitoring of at least part of said spectrum (130, 132); and
o determining said displacement of said magnetic element (114) if said vibrational quantity is outside a predetermined interval (244).

5. The electrical machine according to one of the preceding claims,
- said sensor (114) being an accelerometer for measuring an acceleration of said electrical machine (100).

6. Method for operating a control unit (124) of an electrical machine (100), the method comprising:
- receiving an input signal (223) indicative of a vibrational quantity of the electrical machine (100);
- detecting (250), in response to said input signal (223), a displacement of a magnetic element (114) of the electrical machine (100); and
- providing an output signal (125) in response to a detected displacement of the magnetic element (114).

7. Computer program for processing an input signal (223) of a sensor (122), the input signal (223) being indicative of a vibrational quantity of an electrical machine (100), and the computer program, when being executed by a data processor, being adapted for controlling the method according claim 6.
